Europäisches Patentamt

European Patent Office

Office européen des brevets

(19)

(11) Numéro de publication : **0 040 873**
**B2**

(12) **NOUVEAU FASCICULE DE BREVET EUROPÉEN**

(45) Date de publication du nouveau fascicule du brevet :
12.11.86

(51) Int. Cl.⁴ : **D 21 C 5/02**

(21) Numéro de dépôt : 81200512.2

(22) Date de dépôt : 13.05.81

(54) Procédé pour la régénération de vieux papiers.

(30) Priorité : 22.05.80 FR 8011479

(43) Date de publication de la demande :
02.12.81 Bulletin 81/48

(45) Mention de la délivrance du brevet :
25.04.84 Bulletin 84/17

(45) Mention de la décision concernant l'opposition :
12.11.86 Bulletin 86/46

(84) Etats contractants désignés :
AT BE CH DE FR GB IT LI NL SE

(56) Documents cités :
DE-B- 2 642 319
TAPPI, JOURNAL OF THE TECHNICAL ASSOCIATION
OF THE PULP AND PAPER INDUSTRY, vol. 62, no. 7,
juillet 1979 ATLANTA GA (US) L. PFALZER: "Deinking
of Xerographic and carbonless copy papers", pages
27-30
Broschüre "De-inken" der Degussa AG vom Juni
1972

(73) Titulaire : INTEROX Société anonyme dite:
Rue du Prince Albert, 33
B-1050 Bruxelles (BE)

(72) Inventeur : De Ceuster, Jean
Rue R. De Grimberghe 3
B-1800 Vilvoorde (BE)
Inventeur : Duprez, Paul
Rue des Prés-Communs 26
B-1120 Bruxelles (BE)

(74) Mandataire : Lederer, Franz, Dr. et al
Vanderwerth, Lederer & Riederer Patentanwälte Luci-
le-Grahn-Strasse 22
D-8000 München 80 (DE)

## Description

La présente invention concerne un procédé pour la régénération de vieux papiers contenant des constituants encapsulés, de manière à pouvoir les recycler sous forme d'une pâte. Elle concerne plus particulièrement un procédé pour la régénération de vieux papiers à copier sans carbone contenant des microcapsules.

Les papiers à constituants encapsulés contiennent en général des composés tels que des encres, des pigments, des colorants ou leurs précurseurs recouverts d'une pellicule se présentant sous forme de microcapsules. Ces papiers sont capables de produire une coloration par application d'une pression. Ils peuvent être obtenus selon diverses techniques connues telles que celles décrites dans les brevets US-A-2 505 470, US-A-2 505 471, US-A-2 505 472, US-A-2 505 488 et US-A-2 505 489 déposés le 8 novembre 1947 et cédés à The National Cash Register Co.

La régénération de vieux papiers de ce type est très malaisée à réaliser. Jusqu'à présent, on a procédé à leur désintégration en milieu alcalin et on a soumis la pâte ainsi obtenue à un traitement de flottation pour en éliminer les microcapsules contenant les matières responsables de la coloration.

Les pâtes à papier ainsi régénérées présentent cependant des colorations très variables et très difficiles à éliminer. En effet, la présence d'hydroxyde de sodium au cours de la désintégration provoque une destruction au moins partielle des microcapsules, et donc la libération des matières responsables de la coloration, et accélère leur fixation sur les fibres.

Pour éviter cet inconvénient, on a proposé (demande de brevet FR-A-7 910 274 déposée le 13 avril 1979 au nom de J. M. Voith G.m.b.H.) d'effectuer la désintégration de vieux papiers de ce type en l'absence de tout réactif.

Dans ce cas, on peut également observer une destruction partielle, par simple effet mécanique, des microcapsules avec les mêmes inconvénients que dans le procédé décrit précédemment, ou, si les conditions sont particulièrement douces, on n'obtient qu'un défibrage insuffisant et on ne peut de ce fait séparer correctement les microcapsules au cours de l'étape de flottation, de sorte que, dans les traitements ultérieurs de la pâte, on observe une libération des matières colorantes.

L'invention a pour but de fournir un procédé pour la régénération de vieux papiers à constituants encapsulés qui permet d'éviter les inconvénients des procédés connus et d'obtenir une pâte à papier bien défibrée, non colorée et possédant un degré de blancheur élevé. Elle présente en outre l'avantage d'être très simple à réaliser techniquement. Enfin, les pâtes régénérées selon l'invention peuvent être utilisées avantageusement pour la fabrication de papier impression-écriture ou celle de papier « tissue ».

L'invention concerne à cet effet un procédé pour la régénération des vieux papiers à constituants encapsulés qui comprend la mise en pâte des vieux papiers en présence d'une solution aqueuse alcaline, caractérisé en ce que l'on utilise pour la mise en pâte une solution aqueuse alcaline exempte de silicate de sodium et contenant un composé peroxydé et en ce qu'il est exempt de traitement de flottation.

Le composé alcalin mis en œuvre pour préparer les solutions utilisées selon l'invention est choisi parmi les composés susceptibles de donner à l'eau un pH alcalin. Parmi ceux-ci figurent notamment les hydroxydes de métaux alcalins tels que le sodium et le potassium. L'hydroxyde de sodium convient particulièrement bien. La concentration totale en composés alcalins dans la solution utilisée est choisie en général supérieure à 0,8 % du poids total de vieux papiers secs. Le plus souvent, on la choisit supérieure à 2,2 % du poids total de vieux papiers secs. En général, on maintient cette concentration à moins de 8 %. Les meilleurs résultats ont été obtenus avec des concentrations comprises entre 2,5 et 6 %.

Tous les types de composés peroxydés conviennent pour être utilisés selon l'invention. En général, on utilise des composés peroxydés inorganiques. Parmi ceux-ci, le peroxyde de sodium et le peroxyde d'hydrogène conviennent bien. On utilise le plus avantageusement le peroxyde d'hydrogène. On choisit la concentration en composé peroxydé en général entre 0,1 et 6 %, et de préférence entre 0,3 et 3 % (calculé en $H_2O_2$ 100 %) du poids de vieux papiers secs. Lorsque le composé peroxydé présente un caractère alcalin, on en tient compte pour la détermination de la concentration en autres composés alcalins.

La mise en pâte peut se faire en présence de solutions contenant d'autres additifs tels que des agents stabilisant le composé peroxydé, des dispersants et des séquestrants. On peut ainsi mettre en œuvre des polymères carboxylés tels que ceux décrits dans le brevet belge 850 066 déposé le 4 janvier 1977 au nom de SOLVAY et Cie, ou encore des dérivés du phosphore tels que les dérivés substitués des acides phosphoniques, plus particulièrement les acides aminotri(méthylènephosphonique), 1-hydroxyéthylidène 1,1-diphosphonique, éthylènediaminotétra(méthylènephosphonique), hexaméthylènediaminotétra (méthylènephosphonique) et diéthylènetriaminopenta(méthylènephosphonique), et leurs sels alcalins ou d'ammonium. Ces additifs sont en général mis en œuvre en quantités inférieures à 2 % et de préférence inférieures à 0,5 %, du poids de vieux papiers secs. Des quantités égales à 0,01 % peuvent déjà être efficaces.

Le silicate de sodium, qui est un stabilisant des composés peroxydés utilisé fréquemment en papeterie présente l'inconvénient de provoquer fréquemment la formation d'agglomérats colorés, de sorte que le procédé selon l'invention ne fait pas appel au silicate de sodium.

Dans le procédé selon l'invention, la consistance de la pâte est habituellement comprise entre 0,5 et 10 % et de préférence entre 2 et 8 %.

**0 040 873**

La température utilisée lors de la désintégration est en général choisie supérieure à 50 °C et de préférence supérieure à 60 °C. En général, on ne choisit pas de température supérieure à 100 °C. Les meilleurs résultats ont été obtenus à des températures comprises entre 65 et 85 °C. La durée du traitement peut être très variable. Habituellement, elle est choisie entre 1 et 100 minutes, et de préférence entre 5 et 60 minutes.

La mise en pâte des vieux papiers se fait habituellement en pulpeur ou dans tout autre appareil connu en lui-même et convenant pour cet usage. Des exemples d'appareils de ce type sont décrits dans Tappi Monograph Series n° 31, 1967, Deinking Waste Paper.

Après la mise en pâte des vieux papiers, on peut procéder, de façon avantageuse, à un ou plusieurs lavages de la pâte pour en éliminer les matières colorantes. Pour ce faire, en général, on épaissit et on dilue la pâte plusieurs fois de suite. En général, on procède à 2 à 5 lavages successifs de la pâte (divers types d'appareils connus en eux-mêmes tels que des épaississeurs à tambour peuvent être utilisés à cette fin).

Les eaux de lavage peuvent avantageusement être, au moins partiellement, recyclées au procédé.

Les traitements de lavage peuvent être, de façon avantageuse, suivis d'un ou de plusieurs blanchiments à l'hypochlorite de sodium, éventuellement entrecoupés de lavages.

Pour le blanchiment à l'hypochlorite, on met en général, en œuvre de 0,5 à 10 % et de préférence de 0,8 à 5 % de chlore actif par rapport au poids de vieux papiers secs. Le pH du mélange est en général choisi entre 10,5 et 12,5. On peut l'ajuster à la valeur souhaitée par introduction de petites quantités d'un composé alcalin tel que l'hydroxyde de sodium. La consistance de pâte est habituellement choisie pour ce traitement entre 1 et 25 % et le plus souvent entre 3 et 20 %. La température est en général choisie supérieure à 25 °C, et de préférence supérieure à 30 °C. On n'opère pas habituellement à plus de 90 °C. De bons résultats ont été obtenus à des températures comprises entre 35 et 65 °C.

La durée du blanchiment peut être très variable : elle est habituellement choisie supérieure à 5 minutes et le plus souvent supérieure à 15 minutes. La pâte peut être conservée très longtemps dans la tour de blanchiment, sans qu'il n'y ait aucun inconvénient. Toutefois, au-delà de 8 heures de séjour, on n'observe plus de gain sensible de blancheur. En général, la durée de blanchiment ne dépasse pas 5 heures. De bons résultats ont été obtenus avec des durées de blanchiment comprises entre 20 et 200 minutes. Le blanchiment à l'hypochlorite peut être réalisé dans divers appareils connus en eux-mêmes et convenant pour cet usage, tels que des tours de blanchiment.

Une séquence pour la régénération de vieux papiers contenant des papiers à constituants encapsulés particulièrement adéquate comporte les étapes suivantes :

a) mise en pâte des vieux papiers dans un pulpeur à une température comprise entre 65 et 86 °C en présence de 0,8 à 8 % d'hydroxyde de sodium, de 0,3 à 3 % de peroxyde d'hydrogène et de 0,05 à 1 % d'un agent stabilisant choisi parmi les polymères carboxylés et les dérivés substitués d'acide phosphonique par rapport au poids de papiers secs avec une consistance de pâte de 0,5 à 10 %,

b) au moins un lavage de la pâte, de préférence de 2 à 5 lavages, et

c) blanchiment de la pâte lavée à l'aide d'hypochlorite de sodium en quantités correspondant à 0,8 à 5 % de chlore actif par rapport au poids de papiers secs, à une température comprise entre 40 et 65 °C et avec une consistance de pâte de 3 à 20 %.

La pâte traitée selon l'invention peut en outre, sans que cela soit aucunement indispensable, être soumise à un ou plusieurs traitements tels que l'épuration, le dépastillage et le raffinage. En général, on soumet la pâte traitée selon l'invention à une épuration pour en éliminer les impuretés solides. Divers appareils connus en eux-mêmes peuvent être utilisés à cette fin tels que des cyclones ou des tamis vibrants.

Cette épuration se fait le plus souvent immédiatement après l'étape de mise en pâte.

Afin d'illustrer l'invention sans pour autant en limiter la portée on donne ci-après un exemple pratique de réalisation (essai 3). L'essai 1 a été réalisé à titre de comparaison en l'absence de peroxyde d'hydrogène dans la solution mise en œuvre dans le pulpeur. L'essai 2 concerne à titre de comparaison l'utilisation de silicate de sodium.

## Exemples

Les essais ont été réalisés sur des déchets de papier à copier « sans carbone ». La désintégration des papiers a été réalisée dans un pulpeur du type LHOMARGY® de capacité de 2 l.

Le papier est déchiqueté à la main avant d'être introduit dans le pulpeur. On ajoute ensuite la solution aqueuse contenant tous les constituants à l'exception du peroxyde d'hydrogène. L'eau mise en œuvre pour l'obtention de la pâte a une dureté calcique de 10 degrés allemands. La consistance de la pâte est de 4 %. La solution est portée à la température de l'essai et elle est mélangée aux vieux papiers pendant une minute avant l'introduction du peroxyde d'hydrogène. Le traitement en pulpeur dure 30 minutes. Après traitement on prélève un échantillon pour la mesure de blancheur. Celle-ci est comparée à celle de $BaSO_4$ mesurée au moyen d'un réflectomètre ELREPHO® (ZEISS) équipé du filtre R 457 (norme ISO 2470).

La pâte retirée du pulpeur est filtrée jusqu'à une consistance de 25 %. Elle est ensuite diluée au moyen d'eau déminéralisée jusqu'à une consistance de 1 %, maintenue pendant dix minutes sous agitation et concentrée à 25 %. Cette opération est répétée deux fois. La température au cours des trois

3

## 0 040 873

lavages est de 25 °C.

La consistance de la pâte est ensuite ajustée à 15 % et la dureté de l'eau est ajustée à 10 degrés allemands (par addition d'ions calcium). On procède alors à un blanchiment en tour à l'hypochlorite de sodium pendant 120 minutes. Après blanchiment la pâte est épaissie à 25 % et on prélève un échantillon pour la mesure de blancheur. La pâte est ensuite diluée au moyen d'eau déminéralisée jusqu'à une consistance de 1 %, maintenue pendant dix minutes sous agitation et concentrée à 25 %. On prélève un nouvel échantillon pour la mesure de blancheur.

La nature, la concentration des composés mis en œuvre, les conditions opératoires et les résultats ont été repris au tableau I ci-après.

### Tableau I

| Pulpeur | Essai | | |
|---|---|---|---|
| | 1 | 2 | 3 |
| NaOH, % | 1 | 3 | 3 |
| $H_2O_2$, % | | 1 | 1 |
| Silicate de sodium (38°Bé), % | | 2 | |
| Séquestrant DEQUEST 2066*), % | | | 0,2 |
| Température, °C | 88 | 79 | 79 |
| pH initial | 11,0 | 12,0 | 12,2 |
| Blancheur, °ISO | 45,5 | 61,1 | 60,6 |

| Tour de blanchiment | Nombre de lavages | | |
|---|---|---|---|
| | 3 | 3 | 3 |
| Chlore actif, % | 3 | 1,5 | 1,5 |
| NaOH, % | 0,15 | 0,15 | 0,15 |
| Température, °C | 45 | 48 | 46 |
| pH | 11,8 | 10,7 | 11,8 |
| Blancheur, °ISO | | | |
| avant lavage | 73,5 | 81,6 | 82,7 |
| après lavage | | 82,7**) | 84,6 |

\* Séquestrant DEQUEST® 2066 : sel de sodium de l'acide diéthylènetriaminopenta(méthylènephosphonique).
\*\* Incrustations de matières colorantes avec présence de petits points verts.

### Revendications

1. Procédé pour la régénération de vieux papiers à constituants encapsulés comprenant la mise en pâte des vieux papiers en présence d'une solution aqueuse alcaline caractérisé en ce que l'on utilise pour la mise en pâte une solution aqueuse alcaline exempte de silicate de sodium et contenant un composé peroxydé et en ce qu'il est exempt de traitement de flottation.

2. Procédé selon la revendication 1 caractérisé en ce que l'on choisit comme composé peroxydé le peroxyde d'hydrogène ou le peroxyde de sodium.

3. Procédé selon la revendication 2 caractérisé en ce que l'on choisit comme composé peroxydé le peroxyde d'hydrogène.

4. Procédé selon l'une quelconque des revendications 1 à 3 caractérisé en ce que le composé peroxydé est mis en œuvre en quantités comprises entre 0,3 et 3 % du poids des vieux papiers secs.

5. Procédé selon l'une quelconque des revendications 1 à 4 caractérisé en ce que l'on utilise une solution aqueuse alcaline contenant de l'hydroxyde de sodium.

4

6. Procédé selon l'une quelconque des revendications 1 à 5 caractérisé en ce que l'on utilise une solution aqueuse alcaline contenant de 0,8 à 8 % de composés alcalins par rapport au poids de vieux papiers secs.

7. Procédé selon l'une quelconque des revendications 1 à 6 caractérisé en ce que la mise en pâte est effectuée à une température comprise entre 65 et 85 °C.

8. Procédé selon l'une quelconque des revendications 1 à 7 caractérisé en ce que l'on utilise une solution aqueuse alcaline contenant en outre un stabilisant du composé peroxydé.

9. Procédé selon la revendication 8 caractérisé en ce que l'on choisit le stabilisant du composé peroxydé parmi les polymères carboxylés et les dérivés substitués d'acide phosphonique.

10. Procédé selon l'une quelconque des revendications 1 à 9 caractérisé en ce qu'il comporte les étapes suivantes :

a) mise en pâte des vieux papiers en pulpeur, à une consistance de pâte de 0,5 à 10 %,

b) au moins un lavage de la pâte, et

c) blanchiment de la pâte lavée à l'aide d'hypochlorite de sodium en quantités correspondant à 0,8 à 5 % de chlore actif par rapport au poids de vieux papiers secs.

## Claims

1. Process for regenerating waste paper containing encapsulated constituents, comprising the pulping of the waste paper in the presence of an alkaline aqueous solution, characterised in that an alkaline aqueous solution free of sodium silicate containing a peroxide compound is used for the pulping and in that there is no flotation treatment.

2. Process according to Claim 1, characterised in that hydrogen peroxide or sodium peroxide is chosen as the peroxide compound.

3. Process according to Claim 2, characterised in that hydrogen peroxide is chosen as the peroxide compound.

4. Process according to any one of Claims 1 to 3, characterised in that the peroxide compound is used in amounts of between 0.3 and 3 % of the weight of the dry waste paper.

5. Process according to any one of Claims 1 to 4, characterised in that an alkaline aqueous solution containing sodium hydroxide is used.

6. Process according to any one of Claims 1 to 5, characterised in that an alkaline aqueous solution containing from 0.8 to 8 % of alkaline compounds, relative to the weight of dry waste paper, is used.

7. Process according to any one of Claims 1 to 6, characterised in that the pulping is carried out at a temperature of between 65 and 85 °C.

8. Process according to any one of Claims 1 to 7, characterised in that an alkaline aqueous solution is used which additionally contains a stabiliser for the peroxide compound.

9. Process according to Claim 8, characterised in that the stabiliser for the peroxide compound is chosen from amongst carboxylated polymers and substituted derivatives of phosphonic acid.

10. Process according to any one of Claims 1 to 9, characterised in that it comprises the following steps :

a) pulping of the waste paper in a pulper to a pulp consistency of 0.5 to 10 %,

b) washing of the pulp at least once and

c) bleaching of the washed pulp using sodium hypochlorite in amounts corresponding to 0.8 to 5 % of active chlorine, relative to the weight of dry waste paper.

## Patentansprüche

1. Verfahren zum Regenerieren von Altpapier mit eingekapselten Bestandteilen, umfassend die Verpulpung des Altpapiers in Gegenwart einer wäßrig-alkalischen Lösung, dadurch gekennzeichnet, daß man zur Verpulpung eine wäßrig-alkalische, von Natriumsilikat freie Lösung, die eine peroxidierte Verbindung enthält, verwendet und daß man ohne Flotation arbeitet.

2. Verfahren nach Anspruch 1, dadurch gekennzeichnet, daß man als peroxidierte Verbindung das Wasserstoffperoxid oder das Natriumperoxid wählt.

3. Verfahren nach Anspruch 2, dadurch gekennzeichnet, daß man als peroxidierte Verbindung das Wasserstoffperoxid wählt.

4. Verfahren nach irgendeinem der Ansprüche 1 bis 3, dadurch gekennzeichnet, daß die peroxidierte Verbindung in Mengen zwischen 0,3 und 3 Gewichtsprozent des trockenen Altpapiers eingesetzt wird.

5. Verfahren nach irgendeinem der Ansprüche 1 bis 4, dadurch gekennzeichnet, daß man eine wäßrig-alkalische Lösung, die Natriumhydroxid enthält, verwendet.

6. Verfahren nach irgendeinem der Ansprüche 1 bis 5, dadurch gekennzeichnet, daß man eine wäßrig-alkalische Lösung, die 0,8 bis 8 % alkalischer Verbindungen, bezogen auf das Gewicht trockenen Altpapiers, verwendet.

7. Verfahren nach irgendeinem der Ansprüche 1 bis 6, dadurch gekennzeichnet, daß die Zersetzung bei einer Temperatur zwischen 65 und 85 °C erfolgt.

8. Verfahren nach irgendeinem der Ansprüche 1 bis 7, dadurch gekennzeichnet, daß man eine wäßrig-alkalische Lösung, die außerdem ein Stabilisierungsmittel für die peroxidierte Verbindung enthält, verwendet.

9. Verfahren nach Anspruch 8, dadurch gekennzeichnet, daß man das Stabilisierungsmittel für die peroxidierte Verbindung unter den carboxylierten Polymeren und den substituierten Derivaten von Phosphonsäure wählt.

10. Verfahren nach irgendeinem der Ansprüche 1 bis 9, dadurch gekennzeichnet, daß es die folgenden Stufen umfaßt :

a) Breibildung des Altpapiers im Pulper zu einer Stoffdichte von 0,5 bis 10 %,

b) mindestens einmaliges Waschen des Papierstoffes

c) Bleichen des gewaschenen Papierstoffes mit Natriumhypochlorit in Mengen entsprechend 0,8 bis 5 % aktivem Chlor, bezogen auf das Gewicht trockenen Altpapiers.